# EUROPÄISCHE PATENTSCHRIFT

(11) **EP 1 415 861 B1**
(45) Veröffentlichungstag und Bekanntmachung des Hinweises auf die Patenterteilung: **07.03.2007**
(21) Anmeldenummer: 03024761.3
(22) Anmeldetag: 29.10.2003
(51) Int. Cl.: B60R 13/02

(54) **Transferband mit einzelnen Dekorelementen zur Aufbringung auf eine Unterlage**
Transfer strip with unique decorative element for application to a substrate
Bande de transfert à élément décoratif unique à appliquer sur un substrat

(30) Priorität: 30.10.2002 AT 16362002
(43) Veröffentlichungstag der Anmeldung: 06.05.2004
(73) Patentinhaber: Ulbrichts Witwe GmbH, 4690 Schwanenstadt (AT)
(72) Erfinder: Pschebezin, Anton, 4052 Ansfelden (AT)
(74) Vertreter: Torggler, Paul Norbert

(56) Entgegenhaltungen:
- DE-A- 19 912 069
- DE-A- 19 940 244
- DE-C- 4 405 946
- US-A- 4 517 237
- US-B1- 6 387 472

## Beschreibung

Die Erfindung betrifft ein Transferband mit einzelnen Dekorelementen, insbesondere farbigen Klebebuchstaben zur Aufbringung auf eine Unterlage, beispielsweise im Motorraum von Kraftfahrzeugen sowie ein Verfahren zur Herstellung eines derartigen Transferbandes.

Bestimmte Produkte weisen eine Zusatzbezeichnung zum gewöhnlichen Namen auf, wobei die Zusatzbezeichnung zumindest teilweise auffällig gestaltet wird. Insbesondere ist dies bei Bezeichnung von Kraftfahrzeugen, speziell von Kraftfahrzeugmotoren üblich, die beispielsweise eine Zusatzbezeichnung wie TDI, HDI usw. tragen. Die Zusatzbezeichnungen werden einerseits außen von der Karosserie und andererseits im Motorraum, an einer Abdeckung des Motorblocks od. dgl. angebracht. Die einfachste Vorgangsweise besteht darin, dass die einzelnen Dekorelemente direkt auf die Unterlagen aufgeklebt werden.

Eine ganze Reihe von optisch auffälligen Gestaltungsmöglichkeiten steht zur Verfügung, wenn die Unterlage aus einzelnen Symbolen, Ziffern oder Buchstaben besteht, die ihrerseits dann an der Karosserie (AT 2388 U) bzw. im Motorraum fixiert werden. Diese Symbole, Ziffern oder Buchstaben können beispielsweise aus einem Kunststoff wie ABS hergestellt sein und eine metallisch wirkende Oberfläche aufweisen, an der farbliche Akzente gesetzt werden. So können an einem Schriftzug, beispielsweise TDI od. dgl. ein, zwei oder alle drei Buchstaben mit metallischem Aussehen eine farbige, insbesondere rote Oberflächeneinlage aufweisen. Der Buchstabe kann zu diesem Zweck einen geringfügig erhöhten Rand aufweisen, und die Oberflächeneinlage, die aus einer farbigen Folie hergestellte Dekorelemente umfasst, wird in die Vertiefung eingeklebt. Der erhöhte Rand stellt dabei eine optisch aufwertende Umrahmung und einen Schutz dar.

Werden derartige Zusatzbezeichnungen im Motorraum untergebracht, so ist auch eine erhöhte Temperaturbeständigkeit erforderlich. DE-C-4405946 zeigt die Merkmale des Oberbegriffs der unabhängigen Ansprüche 1 und 8.

Die Erfindung hat es sich nun zur Aufgabe gestellt, ein speziell für die vorstehend beschriebene Anwendung geeignetes Transferband zu schaffen, das die je nach Vorgabe gewünschten einzelnen Dekorelemente zur farblichen Betonung der Zusatzbezeichnung trägt.

Das erfindungsgemäße Transferband ist daher gekennzeichnet durch ein Trägerband, eine auf dem Trägerband angeordnete erste Klebstoffschicht, auf der ersten Klebstoffschicht angeordnete Dekorelemente aus einer transparenten Kunststofffolie, eine auf der Kunststofffolie angeordnete Farbschicht, eine zweite Klebstoffschicht, und ein beide Klebstoffschichten abdeckendes Schutzband. Ein derartiges Transferband ist mit nur gleichen Dekorelementen versehen, wenn in der Zusatzbezeichnung nur ein Symbol farblich hervorgehoben werden soll. Das Transferband kann zum Beispiel eine Reihe von l umfassen, wenn in einem Schriftzug, wie TDI, nur der letzte Buchstabe betont werden soll. Das Transferband umfasst Gruppen von Dekorelementen im richtigen Abstand, wenn an der Zusatzbezeichnung Symbolgruppen hervorgehoben werden sollen, und umfasst, sich wiederholend, alle Dekorelemente im richtigen Abstand, wenn der gesamte Schriftzug beklebt werden soll.

Die metallische, im allgemeinen silberne Oberfläche des Untergrundes kann zu einer Farbänderung führen, d.h. eine bestimmte vorgegebene Farbe verändert sich, da die Metallfarbe durchschlägt. Um dies zu vermeiden, weist eine bevorzugte Ausführung des Transferbandes zwischen der Farbschicht und der zweiten Klebstoffschicht eine opake Grundschicht auf, die vorzugsweise weiß ist.

Da das Trägerband sich nach der Applikation der Dekorelemente leicht entfernen lassen soll, ist weiters bevorzugt vorgesehen, dass die Haftung der ersten Klebstoffschicht zur Kunststofffolie kleiner als die Haftung der zweiten Klebstoffschicht zur Unterlage ist.

Für die erhöhte Temperaturbeständigkeit im Motorraum wird erfindungsgemäß bevorzugt eine Polyamidfolie verwendet, die bis zu etwa 130°C beständig ist.

Im bevorzugten Fall besteht, wie einleitend angegeben, die Unterlage aus einzelnen Symbolen, Ziffern oder Buchstaben, die, insbesondere aus Kunststoff spritzgegossen, nur notdürftig über einen Angusssteg zusammengehalten werden. Beim Entfernen des Trägerbandes nach dem Aufkleben der Dekorelemente auf die Unterlage ist es daher günstig, auch die einzelnen Symbole zu halten, was in einfacher Weise erreicht werden kann, wenn diese einen erhöhten Rand aufweisen, der die zu beklebende Oberfläche umgibt.

Die Trägerfolie weist daher in einer weiteren bevorzugten Ausführung pro Dekorelement zumindest eine Öffnung auf, die zumindest teilweise an einen Rand des Dekorelementes grenzt. So können beispielsweise bei einem T oder einem l ein oder beidseits mittig eine Öffnung vorgesehen sein. Für ein geschlossenes Dekorelement, wie zum Beispiel ein D, kann die Öffnung den gesamten Innenbereich umfassen.

Durch die Öffnung liegt der entsprechende erhöhte Randbereich des Symbols frei und kann beim Abziehen des Trägerbandes zumindest anfangs von einem durch die Öffnung greifenden Niederhalter gehalten werden.

Das Trägerband weist bevorzugt noch zumindest eine Reihe von Transport- und/oder Rapportlöchern auf, um in einer zumindest teilautomatisierten Applikation die richtige Position für jedes Dekorelement oder zumindest des ersten Dekorelementes jeder Gruppe zu erzielen.

Das Verfahren zur Herstellung eines derartigen Trägerbandes sieht insbesondere vor, dass auf eine erste Klebstoffbeschichtung eines Trägerbandes eine transparente Kunststofffolie, und auf die Kunststofffolie eine Farbschicht und eine zweite Klebstoffbeschichtung aufgebracht werden, dass die Dekorelemente aus der Kunststofffolie und außerhalb der Dekorelemente Öffnungen und/oder Löcher aus dem Trägerband ausgestanzt werden, dass die überschüssige Kunststofffolie abgezogen wird, und dass schließlich beide Klebstoffschichten mit einem Schutzband abgedeckt werden.

Nachstehend wird nun die Erfindung anhand der Figuren der beiliegenden Zeichnung näher beschrieben, ohne darauf beschränkt zu sein. Es zeigen:
- Fig. 1: den mehrschichtigen Aufbau eines erfindungsgemäßen Transferbandes in Seitenansicht,
- Fig. 2: eine Draufsicht auf das Trägerband mit teilweise abgehobenem Schutzband, und
- Fig. 3 bis 5: schematische Seitenansichten einer Vorrichtung zum Aufbringen der einzelnen Dekorelemente auf die Zeichen in drei aufeinanderfolgenden Arbeitsschritten.

Ein Transferband weist ein Trägerband 1 auf, an dem nahe der beiden Ränder Transport- und/oder Rapportlöcher 10 angeordnet sind. Das Trägerband 1 ist mit einer ersten Klebstoffschicht 2 versehen, an der Dekorelemente 8 haften, die jeweils aus einer transparenten Kunststofffolie insbesondere Polyamidfolie 3, einer Farbschicht 4, einer opaken Grundschicht 5 und einer zweiten Klebstoffschicht 6 aufgebaut sind. Ein ablösbares Schutzband 7 wird vor der Verwendung des Transferbandes abgezogen.

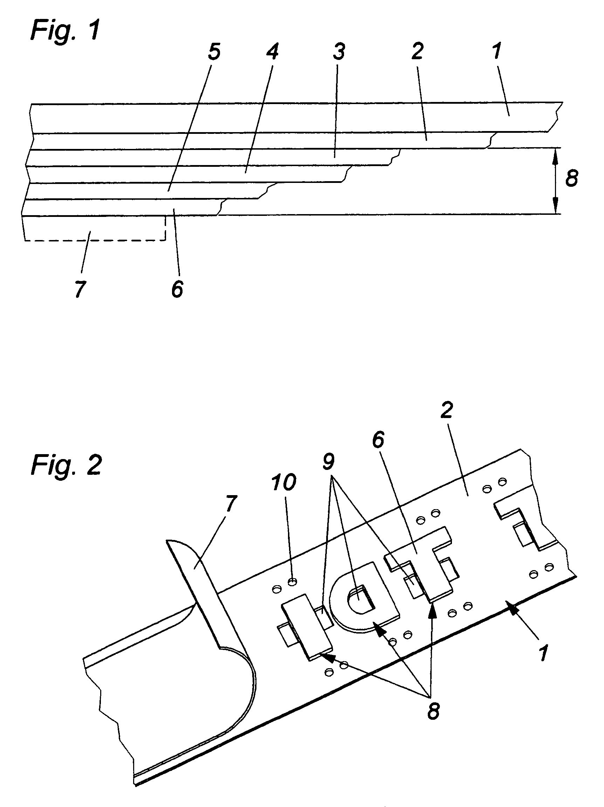

In Fig. 1 ist der Schichtaufbau schematisch gezeigt, wobei das Schutzband 7, das außerhalb der Klebstoffschicht 6 auch die Klebstoffschicht 2 abdeckt, nur strichliert gezeichnet ist. Bei der Herstellung des Transferbandes wird auf das Trägerband 1 die erste Klebstoffschicht 2 vollflächig aufgetragen, auf die ein durchgehender Streifen der transparenten Polyamidfolie 3 aufgeklebt wird. Die Polyamidfolie 3 wird anschließend mit der Farbschicht 4, beispielsweise rot, bedruckt. Um einen farbverändernden Durchschlag der Farbe des späteren Untergrundes zu vermeiden, wird anschließend eine opake Sperr- bzw. Grundschicht aufgebracht, die insbesondere weiß ist. Diese Vorgangsweise kann insoferne auch geändert sein, wenn die Polyamidfolie 3 vor dem Aufkleben auf das Trägerband bereits beschichtet oder eingefärbt ist.

Nunmehr werden mit einem Stanzwerkzeug die gewünschten Dekorelemente 8 oder Folgen von Dekorelementen bzw. Schriftzüge aus der Polyamidfolie 3 ausgestanzt, wobei die Schnitte nur bis zum Trägerband 1 reichen. Gleichzeitig oder anschließend werden mit einem zweiten Stanzwerkzeug, das auch das Trägerelement 1 durchschneidet, Öffnungen 9, die jeweils zumindest teilweise an den Rand eines Dekorelementes 8 grenzen, und Rapport- und/oder Transportlöcher 10 im Randbereich hergestellt. Von den in Fig. 2 gezeigten Buchstaben T, D und l sind dem T und dem l im Mitteilteil beidseitig je eine Öffnung 9 zugeordnet, während beim Buchstaben D eine einzige Öffnung 9 vorgesehen ist, die den Innenbereich umfasst. Anschließend wird die überschüssige Polyamidfolie 3 vom Trägerband 1 abgezogen. Die zweite Klebstoffschicht 6, die zur Aufbringung der Dekorelemente 8 auf eine nicht gezeigte Unterlage dient, kann daher vor der Ausstanzung der Folie oder auch nachher auf die opake Sperr- bzw. Grundschicht 5 aufgebracht werden.

Das auf diese Weise mit einzelnen Dekorelementen 8 bestückte Trägerband 1 wird mit dem Schutzband 7 abgedeckt und steht dann für die Verwendung zur farblichen Betonung entsprechender Zeichen der Zusatzbezeichnung eines Kraftfahrzeuges bzw. Kraftfahrzeugmotors zur Verfügung, die ihrerseits auf eine Abdeckung oder einen Karosserieteil aufgebracht werden.

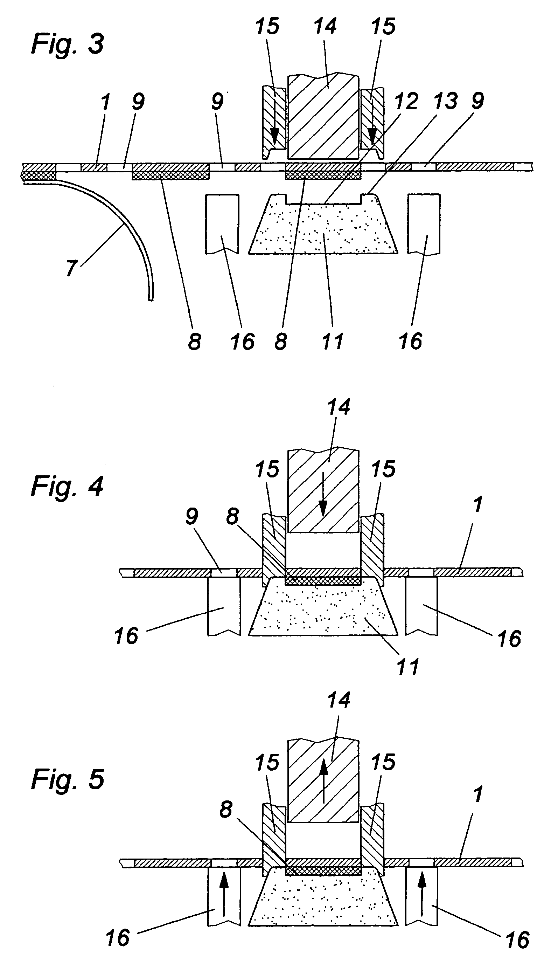

In der schematischen Darstellung der Fig. 3 bis 5 sind die wesentlichen Schritte des Transfers der einzelnen Dekorelemente 8 auf die Oberfläche 12 der Zeichen 11 gezeigt.

Am Eingang der Transferstation wird vom zugeführten Trägerband 1 das Schutzband 7 abgezogen, sodass die klebrige Unterseite der einzelnen Dekorelemente 8 frei liegt. Das Trägerband 1 wird weiterbewegt, bis das zu übertragende Dekorelement 8 oberhalb des zu beklebenden Zeichens 11 liegt. In dieser Position wird der Niederhalter 15 nach unten bewegt, und ergreift durch die Öffnungen 9 im Trägerband 1 hindurch den über die zu beklebende Oberfläche 12 hochstehenden Rand 13 des Zeichens 11, das dadurch in der richtigen Position zusätzlich fest- und niedergehalten ist (Fig. 4). Anschließend wird der Anpressstempel 14 nach unten bewegt, der das klebende Dekorelement 8 auf die vertiefte Oberfläche 12 des Zeichens 11 aufpresst. Der Anpressstempel wird anschließend wieder zurückgezogen (Fig. 5), sodass das Trägerband 11 mit Hilfe von Ablöseelementen 16 nach oben gehoben werden kann, wobei es sich vom aufgeklebten Dekorelement 8 löst.

Für die zweite Klebstoffschicht 6 wird ein Klebstoff gewählt, dessen Haftung zur Unterlage größer als die Haftung der ersten Klebstoffschicht 2 zur Polyamidfolie 3 ist.

Alternativ kann, wenn die Zeichen in ihrer Position ausreichend festgelegt sind, der Niederhalter 15 auch erst nach dem Aufkleben des Dekorelementes 8 abgesenkt werden, um den Rand 13 des beklebten Zeichens 11 nur während des Anhebens des Trägerbandes niederzuhalten.

Die Unterlage kann natürlich auch die Abdeckung oder der Karosserieteil selbst sein, auf der die Dekorelemente direkt aufgeklebt werden. Für diesen Fall sind die Öffnungen 9 nicht erforderlich, sondern nur die Transport- und/oder Rapportlöcher 10.

## Patentansprüche

1. Transferband mit einzelnen Dekorelementen, insbesondere farbigen Klebebuchstaben zur Aufbringung auf eine Unterlage, beispielsweise im Motorraum von Kraftfahrzeugen, **gekennzeichnet durch**
ein Trägerband (1),
eine auf dem Trägerband (1) angeordnete erste Klebstoffschicht (2),
auf der ersten Klebstoffschicht (2) angeordnete Dekorelemente (8) aus einer transparenten Kunststofffolie (3),
eine auf der Kunststofffolie (3) angeordnete Farbschicht (4),
eine zweite, auf der Farbschicht angeordnete Klebstoffschicht (6), und
ein beide Klebstoffschichten (2, 6) abdeckendes Schutzband (7).

2. Transferband nach Anspruch 1, **dadurch gekennzeichnet, dass** zwischen der Farbschicht (4) und der zweiten Klebstoffschicht (6) eine opake Grundschicht (5) angeordnet ist.

3. Transferband nach Anspruch 2, **dadurch gekennzeichnet, dass** die Grundschicht (5) weiß ist.

4. Transferband nach einem der Ansprüche 1 bis 3, **dadurch gekennzeichnet, dass** die Haftung der ersten Klebstoffschicht (2) zur Kunststofffolie (3) kleiner als die Haftung der zweiten Klebstoffschicht (6) zur Unterlage ist.

5. Transferband nach einem der Ansprüche 1 bis 4, **dadurch gekennzeichnet, dass** die Kunststofffolie (3) eine Polyamidfolie ist.

6. Transferband nach einem der Ansprüche 1 bis 5, **dadurch gekennzeichnet, dass** das Trägerband (1) pro Dekorelement (8) zumindest eine Öffnung (9) aufweist, die zumindest teilweise an einen Rand des Dekorelementes (8) grenzt.

7. Transferband nach einem der Ansprüche 1 bis 6, **dadurch gekennzeichnet, dass** das Trägerband (1) zumindest eine Reihe von Transport- und/oder Rapportlöchern (10) aufweist.

8. Verfahren zur Herstellung eines Transferbandes mit Dekorelementen, die auf eine Unterlage aufklebbar sind, **dadurch gekennzeichnet, dass** auf eine erste Klebstoffbeschichtung (2) eines Trägerbandes (1) eine transparente Kunststofffolie (3), und auf die Kunststofffolie (3) eine Farbschicht (4) und eine zweite Klebstoffbeschichtung (6) aufgebracht werden, dass die Dekorelemente (8) aus der Kunststofffolie (3) und außerhalb der Dekorelemente (8) Öffnungen (9) und/oder Löcher (10) aus dem Trägerband (1) ausgestanzt werden, dass die überschüssige Kunststofffolie (3) abgezogen wird, und dass schließlich beide Klebstoffschichten (2, 6) mit einem Schutzband (7) abgedeckt werden.

## Claims

1. A transfer strip with individual decorative elements, in particular coloured adhesive letters for application to a substrate, in particular in the engine compartment of motor vehicles, **characterised by**
a carrier strip (1),
a first adhesive layer (2) arranged on the carrier strip (1),
decorative elements (8) which are arranged on the first adhesive layer (2) and which comprise a transparent plastic film (3),
a coloured layer (4) arranged on the plastic film (3),
a second adhesive layer (6) arranged on the coloured layer, and
a protective strip (7) covering both adhesive layers (2, 6).

2. A transfer strip according to claim 1 **characterised in that** an opaque base layer (5) is arranged between the coloured layer (4) and the second adhesive layer (6).

3. A transfer strip according to claim 2 **characterised in that** the base layer (5) is white.

4. A transfer strip according to one of claims I to 3 **characterised in that** the adhesion of the first adhesive layer (2) to the plastic film (3) is less than the adhesion of the second adhesive layer (6) to the substrate.

5. A transfer strip according to one of claims 1 to 4 **characterised in that** the plastic film (3) is a polyamide film.

6. A transfer strip according to one of claims 1 to 5 **characterised in that** the carrier strip (1) has for each decorative element (6) at least one opening (9) which at least partially adjoins an edge of the decorative element (8).

7. A transfer strip according to one of claims 1 to 6 **characterised in that** the carrier strip (1) has at least one row of transport and/or register holes (10).

8. A process for the production of a transfer strip having decorative elements which can be stuck on to a substrate, **characterised in that** a transparent plastic film (3) is applied to a first adhesive coating (2) of a carrier strip (1) and a coloured layer (4) and a second adhesive coating (6) are applied to the plastic film (3), the decorative elements (8) are stamped out of the plastic film (3) and outside the decorative elements (8) openings (9) and/or holes (10) are stamped out of the carrier strip (1), the excess plastic film (3) is pulled off, and finally both adhesive layers (2, 6) are covered with a protective strip (7).

## Revendications

1. Bande de transfert avec des éléments décoratifs individuels, notamment des lettres à coller en couleurs, destinés à être appliqués sur un support, par exemple dans le compartiment moteur de véhicules automobiles, **caractérisée par**
une bande support (1),
une première couche d'agent adhésif (2) disposée sur la bande support (1),
des éléments décoratifs (8) en un film de matière plastique transparente (3), disposés sur la première couche d'agent adhésif (2),
une couche colorée (4) disposée sur le film de matière plastique (3),
une deuxième couche d'agent adhésif (6), disposée sur la couche colorée, et
une bande protectrice (7) recouvrant les deux couches d'agent adhésif (2, 6).

2. Bande de transfert selon la revendication 1, **caractérisée en ce qu'**une couche de base opaque (5) est disposée entre la couche colorée (4) et la deuxième couche d'agent adhésif (6).

3. Bande de transfert selon la revendication 2, **caractérisée en ce que** la couche de base (5) est blanche.

4. Bande de transfert selon l'une quelconque des revendications 1 à 3, **caractérisée en ce que** l'adhérence de la première couche d'agent adhésif (2) par rapport au film de matière plastique (3) est inférieure à l'adhérence de la deuxième couche d'agent adhésif (6) par rapport au support.

5. Bande de transfert selon l'une quelconque des revendications 1 à 4, **caractérisée en ce que** le film de matière plastique (3) est un film en polyamide.

6. Bande de transfert selon l'une quelconque des revendications 1 à 5, **caractérisée en ce que** la bande support (1) comporte pour chaque élément décoratif (8) au moins un orifice (9) qui est au moins partiellement adjacent à un bord de l'élément décoratif (8).

7. Bande de transfert selon l'une quelconque des revendications 1 à 6, **caractérisée en ce que** la bande support (1) comporte au moins une rangée de trous de transport et/ou de repérae (10).

8. Procédé pour la fabrication d'une bande de transfert avec des éléments décoratifs, susceptibles d'être collés sur un support, **caractérisé en ce qu'**on applique sur un premier revêtement d'agent adhésif (2) d'une bande support (1) un film de matière plastique transparente (3) et sur le film de matière plastique (3) une couche colorée (4) et un deuxième revêtement d'agent adhésif (6), **en ce que** les éléments décoratifs (8) sont découpés dans le film de matière plastique (3), et à l'extérieur des éléments décoratifs (8), des orifices (9) et/ou des trous (10) sont découpés dans la bande support (1), **en ce qu'**on retire le film de matière plastique (3) excédentaire et **en ce que** pour finir, on recouvre les deux couches d'agent adhésif (2, 6) d'une bande protectrice (7).
